(19) Europäisches Patentamt
European Patent Office
Office européen des brevets

(11) **EP 4 779 048 A1**

(12) **EUROPEAN PATENT APPLICATION**
published in accordance with Art. 153(4) EPC

(43) Date of publication:
**22.07.2026 Bulletin 2026/30**

(21) Application number: **25741930.9**

(22) Date of filing: **14.01.2025**

(51) International Patent Classification (IPC):
*C22C 38/00* (2006.01)   *C21D 9/46* (2006.01)
*C22C 38/58* (2006.01)   *C25B 1/04* (2021.01)
*C25B 9/00* (2021.01)   *C25B 11/046* (2021.01)
*C25F 3/24* (2006.01)

(52) Cooperative Patent Classification (CPC):
**C21D 9/46; C22C 38/00; C22C 38/58; C25B 1/04;
C25B 9/00; C25B 11/046; C25F 3/24;** Y02E 60/36

(86) International application number:
**PCT/JP2025/000896**

(87) International publication number:
**WO 2025/154705 (24.07.2025 Gazette 2025/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.01.2024 JP 2024004730**

(71) Applicant: **Nippon Steel Corporation
Tokyo 100-8071 (JP)**

(72) Inventors:
• **NAKATSUJI, Satoshi
Tokyo 100-0005 (JP)**
• **TAI, Yoshikazu
Tokyo 100-0005 (JP)**

(74) Representative: **Leinweber & Zimmermann
Patentanwalts-PartG mbB
European Patent Attorneys
Viktualienmarkt 8
80331 München (DE)**

(54) **STAINLESS STEEL MATERIAL FOR ALKALINE WATER ELECTROLYSIS DEVICE, MEMBER FOR ALKALINE WATER ELECTROLYSIS DEVICE AND METHOD FOR PRODUCING SAME, AND ALKALINE WATER ELECTROLYSIS DEVICE**

(57) A stainless steel material for an alkaline water electrolysis device, including, on a mass basis, C: 0.100% or less, Si: 1.00% or less, Mn: 0.30 to 3.00%, Ni: 10.00 to 35.00%, P: 0.0300% or less, S: 0.0030% or less, Cr: 16.0 to 28.0%, N: 0.01 to 0.25%, Cu: 0.01 to 1.00%, Mo: 0.10 to 8.00%, and Al: 0.005 to 0.100%, the balance being Fe and impurities.

EP 4 779 048 A1

## Description

[Technical Field]

The present invention relates to a stainless steel material for an alkaline water electrolysis device, a member for an alkaline water electrolysis device and a method for producing the same, and an alkaline water electrolysis device.

[Background Art]

Global warming countermeasures have become a global issue, and the use of renewable energy that does not emit $CO_2$ is being promoted as one of the countermeasures. However, since renewable energy uses natural energy, there is a problem that it is difficult to match the amount of power generation to demands from people's lifestyles. For example, solar power generation cannot generate electricity in bad weather or at night when electricity for daily life is needed. In addition, under climate conditions with mild daytime temperatures, power from solar power generation may become surplus in consideration of other power generation methods, and depending on the power transmission system, the surplus power may adversely affect the power transmission system. Therefore, there may be a contradiction in which the surplus power cannot be utilized even in good weather. There is also a method of storing surplus power in storage batteries, but currently, large storage batteries are required and are expensive, so there are many problems in applying this method to large-scale power generation.

As a means of effectively utilizing this surplus power, a method for producing hydrogen generated by electrolytic decomposition of water is being studied. If hydrogen can be produced and stored, it is expected that a stable supply of power by carbon-free renewable energy can be achieved by generating electricity with fuel cells using hydrogen at night or in bad weather. In addition, by generating methane from the hydrogen generated as described above, it is also possible to make a fuel that is easier to store and more environmentally friendly than hydrogen.

In general, methods for electrolyzing water are broadly classified into alkaline water electrolysis, solid polymer electrolyte water electrolysis, and high-temperature water electrolysis. Among these, the alkaline water electrolysis is considered promising in industrial applications that require strict cost-effectiveness because there is a possibility of using low-cost materials such as iron-based materials.

Some water electrolysis systems have already begun to be put into practical use. For example, an example of a water electrolysis device is described in Figures 1 and 2 of Patent Literature 1. In the water electrolysis device described in Patent Literature 1, a diaphragm is installed between electrodes provided in water to electrolyze water, thereby generating oxygen on the anode side and hydrogen on the cathode side, and extracting hydrogen.

Patent Literature 1 discloses that nickel electrodes are used because stainless steel does not have durability in an alkaline water electrolysis environment. However, nickel is a rare metal, which is not only expensive but also has limited producing countries and geopolitical risks. In addition, speculative volatility of raw material prices is also a problem.

Stainless steel material is widely known as a corrosion-resistant material that is less expensive than nickel.

As an example of applying the stainless steel material to the alkaline water electrolysis, Patent Literature 2 describes a stainless steel anode characterized by immersing a stainless steel anode in a corrosive solution mainly composed of an aqueous potassium hydroxide solution and electrolyzing it before using it in an alkaline water electrolysis device. According to Patent Literature 2, there is the description that the corrosion resistance of the stainless steel material is improved as compared to untreated material by an electrolytic treatment in the corrosive solution. However, since the evaluation time is a short period of about 160 hours, and there is no track record of evaluation over a long period of time, it is not clear whether durability over a long time is sufficient.

Further, Patent Literature 3 describes a stainless steel material for an alkaline water electrolysis device comprising a base material made of stainless steel and a film formed on a surface of the base material, wherein the film contains fluorine. This stainless steel material is produced by performing an anodic electrolytic treatment in an alkaline aqueous solution after a preliminary treatment of either an immersion treatment of immersing the stainless steel material in an aqueous solution containing hydrofluoric acid or an inorganic compound containing fluorine, or an electrolytic treatment of electrolyzing the stainless steel material in the aqueous solution.

Furthermore, Patent Literature 4 describes a stainless steel material for an electrolytic treatment device comprising a base material made of stainless steel and a film formed on a surface of the base material, wherein at least Ni is present in the film, and a Ni concentration, an Fe concentration, and a Cr concentration in the film satisfy a predetermined relational expression. This stainless steel material is produced by performing an anodic electrolytic treatment in an alkaline aqueous solution, but it discloses that, before the treatment, a preliminary treatment of one or both of an immersion treatment of immersing the stainless steel material in an aqueous solution containing hydrofluoric acid or an inorganic compound containing fluorine, or an electrolytic treatment of electrolyzing the stainless steel material in the aqueous solution may be performed.

[Citation List]

[Patent Literature]

[PTL 1] Japanese Patent Application Publication No. 2017-122255 A
[PTL 2] Japanese Patent Application Publication No. 2008-45205 A
[PTL 3] Japanese Patent Application Publication No. 2020-164915 A
[PTL 4] Japanese Patent Application Publication No. 2021-161482 A [Summary of Invention]

[Technical Problem]

Since alkaline water electrolysis devices perform electrolysis in an alkaline environment and at high potential, various members such as electrodes are exposed to a severe corrosive environment. When metals such as Fe and Cr are eluted from the members, deterioration of an electrolytic membrane and the like is a concern, so materials used for the members are required to have high resistance to metal elution in a severe corrosive environment.

Stainless steel material containing Ni is advantageous for improving durability (resistance to metal elution) during alkaline water electrolysis because a film containing Ni can be formed on a surface of the stainless steel material.

However, simply increasing the Ni content in the stainless steel material may not enable formation of a film with excellent corrosion resistance during alkaline water electrolysis.

In addition, when the Ni content in the stainless steel material is lower, unless a preliminary treatment is performed before an anodic electrolytic treatment in an alkaline aqueous solution, durability during alkaline water electrolysis often cannot be ensured. Therefore, there is a problem of costs and time required for the preliminary treatment.

The present invention was made to solve the above problems. An object of the present invention is to provide a stainless steel material for an alkaline water electrolysis device that provides a member for an alkaline water electrolysis device capable of ensuring durability during alkaline water electrolysis without performing a preliminary treatment.

Further, an object of the present invention is to provide a member for an alkaline water electrolysis device and a method for producing the same that can ensure durability during alkaline water electrolysis without performing a preliminary treatment.

Furthermore, an object of the present invention is to provide an alkaline water electrolysis device comprising the stainless steel material for an alkaline water electrolysis device or the member for an alkaline water electrolysis device having the above features.

[Solution to Problem]

As a result of intensive studies for stainless steel materials for alkaline water electrolysis devices in order to solve the above problems, the present inventors have found that by increasing the Ni content while adding a predetermined amount of Al, a film with excellent durability during alkaline water electrolysis can be formed without performing a preliminary treatment, and have completed the present invention.

Thus, the present invention is a stainless steel material for an alkaline water electrolysis device, comprising, on a mass basis, C: 0.100% or less, Si: 1.00% or less, Mn: 0.30 to 3.00%, Ni: 10.00 to 35.00%, P: 0.0300% or less, S: 0.0030% or less, Cr: 16.0 to 28.0%, N: 0.01 to 0.25%, Cu: 0.01 to 1.00%, Mo: 0.10 to 8.00%, and Al: 0.005 to 0.100%, the balance being Fe and impurities.

The present invention also relates to a member for an alkaline water electrolysis device, the member comprising a base material made of the stainless steel material for an alkaline water electrolysis device, and a Ni-enriched film formed on a surface of the base material.

The present invention also relates to a method for producing a member for an alkaline water electrolysis device, comprising disposing a base material made of the stainless steel material for an alkaline water electrolysis device in an alkaline water electrolysis device and performing an electrolytic treatment.

Furthermore, the present invention relates to an alkaline water electrolysis device comprising the stainless steel material for an alkaline water electrolysis device or the member for an alkaline water electrolysis device.

[Advantageous Effects of Invention]

According to the present invention, it is possible to provide a stainless steel material for an alkaline water electrolysis device that provides a member for an alkaline water electrolysis device capable of ensuring durability during alkaline water electrolysis without performing a preliminary treatment.

Further, according to the present invention, it is possible to provide a member for an alkaline water electrolysis device and a method for producing the same that can ensure durability during alkaline water electrolysis without performing a preliminary treatment.

Furthermore, according to the present invention, it is possible to provide an alkaline water electrolysis device comprising the stainless steel material for an alkaline water electrolysis device or the member for an alkaline water electrolysis device having the above features.

[Description of Embodiments]

Hereinafter, embodiments of the present invention will be specifically described. It should be understood that the invention is not limited to the following embodiments, and those which have appropriately added changes, improvements and the like to the following embodiments based on knowledge of a person skilled in the art without departing from the spirit of the invention fall within the scope of the invention.

It should be noted that, as used herein, the expression "%" in relation to any component means "% by mass", unless otherwise specified.

<Stainless Steel Material for Alkaline Water Electrolysis Device>

A stainless steel material for an alkaline water electrolysis device (hereinafter, may be abbreviated as "stainless steel material") according to an embodiment of the present invention comprises, on a mass basis, C: 0.100% or less, Si: 1.00% or less, Mn: 0.30 to 3.00%, Ni: 10.00 to 35.00%, P: 0.0300% or less, S: 0.0030% or less, Cr: 16.0 to 28.0%, N: 0.01 to 0.25%, Cu: 0.01 to 1.00%, Mo: 0.10 to 8.00%, and Al: 0.005 to 0.100%, the balance being Fe and impurities.

As used herein, the "alkaline water electrolysis device" means a device that produces hydrogen and oxygen in an alkaline solution. The alkaline solution used in the alkaline water electrolysis device is not particularly limited, and solutions with a pH greater than 7, such as strong alkaline solutions (pH 14 or greater) or weak alkaline solutions (pH 11 to 13), can be used. Specific examples of the alkaline solution include a KOH solution, a NaOH solution, a $K_2CO_3$ solution, and the like. The alkaline water electrolysis device is preferably an alkaline water electrolysis device using an anion exchange membrane (AEM).

Also, the term "stainless steel material" as used herein means a material formed of stainless steel, and a shape of the material is not particularly limited. Examples of the shape of the material include a sheet shape (including a strip shape), a rod shape, and a tubular shape. Further, the material may be various shaped steels having cross-sectional shapes such as T-shape and I-shape.

Further, the term "impurities" as used herein refers to components which are contaminated by raw materials such as ores and scraps, and various factors in the production steps, when the stainless steel materials are industrially produced, and which are permissible in a range that does not adversely affect the present invention. For example, the impurities include unavoidable impurities.

In addition, with respect to the content of each element as used herein, containing or comprising "xx % or less" means that it contains xx % or less but contains an amount more than 0% (especially, more than the impurity level). Further, as used herein, a numerical range expressed using "to" means a range including numerical values described before and after "to" as a lower limit value and an upper limit value.

The stainless steel material according to an embodiment of the present invention can further comprise, as necessary, one or more selected from Nb: 1.00% or less, Ti: 1.00% or less, Mg: 0.1000% or less, Ca: 0.1000% or less, Zr: 1.00% or less, Co: 1.00% or less, V: 1.00% or less, W: 1.00% or less, REM: 0.10% or less, Sn: 0.10% or less, and B: 0.0100% or less.

Each component will be described in detail below.

<C: 0.100% or less>

C is an element effective for stabilizing the austenite phase. However, since C promotes deposition of Cr carbide, an excessively high C content generates intergranular corrosion to decrease durability during alkaline water electrolysis. Therefore, the C content is 0.100% or less, and preferably 0.095% or less, and more preferably 0.090% or less, and still more preferably 0.085% or less, and particularly preferably 0.080% or less. On the other hand, the lower limit value of the C content is not particularly limited, but it is 0.001% from a viewpoint of obtaining the above effects by C.

In addition, the above numerical value (lower limit value) or numerical range of the C content may be any combination of the numerical value or numerical range. Therefore, for example, the C content can be 0.001 to 0.100%, 0.001 to 0.095%, 0.001 to 0.090%, 0.001 to 0.085%, or 0.001 to 0.080%. The same applies to the numerical values (upper limit value or lower limit value) or numerical ranges of the contents of other elements below.

<Si: 1.00% or Less>

Si is an element effective for deoxidation and improvement of oxidation resistance. However, if the Si content is too high, the stainless steel material hardens, so that workability and toughness (particularly, toughness of a welded portion when welded) decrease. For this reason, the Si content is 1.00% or less, preferably 0.95% or less, more preferably 0.90% or less, still more preferably 0.85% or less, and particularly preferably 0.80% or less. On the other hand, the lower limit value of the Si content is not particularly limited, but it is 0.01% from a viewpoint of obtaining the above effects by Si.

<Mn: 0.30 to 3.00%>

Mn is an element necessary for forming a Ni-enriched film on a surface of the stainless steel material during alkaline water electrolysis. To ensure this effect, the Mn content is 0.30% or more, preferably 0.35% or more, and more preferably 0.40% or more. However, if the Mn content is too large, corrosion resistance decreases. For this reason, the Mn content is 3.00% or less, preferably 2.80% or less, more preferably 2.50% or less, still more preferably 2.00% or less, and particularly preferably 1.50% or less.

<Ni: 10.00 to 35.00%>

Ni is an element effective for improving durability (resistance to metal elution) during alkaline water electrolysis. To ensure this effect, the Ni content is 10.00% or more, preferably 10.50% or more, more preferably 11.00% or more, and still more preferably 11.50% or more. However, if the Ni content is too large, cost increases. For this reason, the Ni content is 35.00% or less, and preferably 34.50% or less.

<P: 0.0300% or less>

P is an element contained in various raw materials. If the P content is too large, weldability and workability decrease. For this reason, the P content is 0.0300% or less, preferably 0.0290% or less, and more preferably 0.0250% or less. On the other hand, the lower limit of the P content is not particularly limited, but removing P requires very large costs for refining. For this reason, in consideration of economic efficiency, the P content can be 0.0001% or more.

<S: 0.0030% or less>

S is an element contained in various raw materials. If the S content is too large, toughness (particularly, toughness of a welded portion when welded) decreases, and inclusions that serve as a corrosion starting point are easily generated. Therefore, the S content is 0.0030% or less, and preferably 0.0029% or less, and more preferably 0.0025% or less. On the other hand, the lower limit of the S content is not particularly limited, but removing S requires very large costs for refining. For this reason, in consideration of economic efficiency, the S content can be 0.0001% or more.

<Cr: 16.0 to 28.0%>

Cr is an element effective for ensuring corrosion resistance. To ensure this effect, the Cr content is 16.0% or more, preferably 16.5% or more, and more preferably 17.0% or more. However, if the Cr content is too large, cost increases. Therefore, the Cr content is 28.0% or less, and preferably 27.5% or less, and more preferably 27.0% or less.

<N: 0.01 to 0.25%>

N is an element effective for cost reduction. In addition, N is also an element that forms a solid solution in the austenite phase to increase strength and corrosion resistance and contributes to alloy saving. To ensure these effects, the N content is 0.01% or more, preferably 0.02% or more, more preferably 0.03% or more, and still more preferably 0.05% or more. However, if the N content is too large, bubbles are easily generated in the stainless steel material. For this reason, the N content is 0.25% or less, preferably 0.23% or less, and more preferably 0.20% or less.

<Cu: 0.01 to 1.00%>

Cu is an effective element for desulfurization and deoxidation. In addition, Cu also contributes to improving corrosion resistance. To ensure this effect, the Cu content is 0.01% or more, preferably 0.03% or more, more preferably 0.05% or more, and still more preferably 0.10% or more. However, if the Cu content is too large, cost increases. Therefore, the Cu content is 1.00% or less, and preferably 0.95% or less, and more preferably 0.90% or less.

<Mo: 0.10 to 8.00%>

Mo is an effective element for improving the corrosion resistance. To ensure this effect, the Mo content is 0.10% or more, preferably 0.13% or more, more preferably 0.15% or more, and still more preferably 0.20% or more. However, if the Mo content is too large, cost increases. For this reason, the Mo content is 8.00% or less, preferably 7.80% or less, and more preferably 7.50% or less.

<Al: 0.005 to 0.100%>

Al is eluted in an operating environment (an alkaline environment and a high potential environment) of the alkaline water electrolysis device, but it hydrates on a surface of the stainless steel material, so that an elution rate is slower than other metals such as Fe and Cr, and Al also has an effect of reducing an elution rate of other metals. In addition, Al is also an element effective for improving oxidation resistance, deoxidation property, and workability. To ensure these effects, the Al content is 0.005% or more, preferably 0.010% or more, more preferably 0.020% or more, still more preferably 0.028% or more, and particularly preferably 0.030% or more. However, if the Al content is too large, oxidation resistance and deoxidation property conversely decrease, and inclusions are easily generated. For this reason, the Al content is 0.100% or less, preferably 0.098% or less, and more preferably 0.095% or less.

<Nb: 1.00% or Less, Ti: 1.00% or Less>

Nb and Ti are elements effective for suppressing sensitization and improving intergranular corrosion resistance. However, if the contents of Nb and Ti are too large, workability decreases and cost also increases. For this reason, each of the contents of Nb and Ti is 1.00% or less, preferably 0.90% or less, and more preferably 0.80% or less. On the other hand, the lower limits of the contents of Nb and Ti are not particularly limited, but in order to ensure the above effects, the contents can be 0.01% or more, 0.03% or more, or 0.05% or more, respectively.

<Mg: 0.1000% or Less, Ca: 0.1000% or Less>

Mg and Ca are elements effective for suppressing generation of inclusions and improving corrosion resistance. However, excessively high contents of Mg and Ca will decrease the hot workability. For this reason, each of the contents of Mg and Ca is 0.1000% or less, preferably 0.0900% or less, and more preferably 0.0800% or less. On the other hand, the lower limits of the contents of Mg and Ca are not particularly limited, but in order to ensure the above effects, the contents can be 0.0001% or more, 0.0003% or more, or 0.0005% or more, respectively.

<Zr: 1.00% or Less, Co: 1.00% or Less, V: 1.00% or Less, W: 1.00% or Less>

Zr, Co, V, and W are elements effective for improving oxidation resistance. However, if the contents of Zr, Co, V, and W are too large, workability and toughness decrease and cost also increases. For this reason, each of the contents of Zr, Co, V, and W is 1.00% or less, preferably 0.90% or less, and more preferably 0.80% or less. On the other hand, the lower limits of the contents of Zr, Co, V, and W are not particularly limited, but in order to ensure the above effects, the contents can be 0.01% or more, 0.02% or more, or 0.03% or more, respectively.

<REM: 0.10% or less>

REM (rare earth element) is an element effective for improving oxidation resistance. However, if the REM content is too large, manufacturability is impaired and cost also increases. For this reason, the REM content is 0.10% or less, preferably 0.09% or less, and more preferably 0.08% or less. On the other hand, the lower limit of the REM content is not particularly limited, but in order to ensure the above effects, the content can be 0.01% or more, 0.02% or more, or 0.03% or more.

REM is the generic name for 17 elements in total: Sc, Y, and 15 elements (lanthanoides) from La to Lu, and the REM content means the total content of these elements. These elements can be used alone or in combination of two or more. Moreover, the lanthanides are industrially added in the form of misch metals.

<Sn: 0.10% or less>

Sn is an element effective for improving oxidation resistance. However, if the Sn content is too large, hot workability decreases. For this reason, the Sn content is 0.10% or less, preferably 0.09% or less, and more preferably 0.08% or less. On the other hand, the lower limit of the Sn content is not particularly limited, but in order to ensure the above effects, the content can be 0.01% or more or 0.02% or more.

<B: 0.0100% or less>

B is an element effective for improving hot workability. However, if the B content is too large, corrosion resistance decreases. For this reason, the B content is 0.0100% or less, preferably 0.0095% or less, and more preferably 0.0090% or less. On the other hand, the lower limit of the B content is not particularly limited, but in order to ensure the above effects, the content can be 0.0001% or more, preferably 0.0003% or more, and more preferably 0.0005% or more.

The stainless steel material according to an embodiment of the present invention has an austenitic metal structure.

The term "austenitic" as used herein means that the metal structure is mainly made of an austenite phase at ordinary temperature. Therefore, the "austenitic" includes those containing minor amounts of phases other than the austenite phase (for example, ferrite phases, martensite phases, etc.). However, "austenitic" does not include a duplex structure of a ferrite phase and an austenite phase, a duplex structure of a ferrite phase and a martensite phase, or a duplex structure of a ferrite phase, an austenite phase, and a martensite phase.

The stainless steel material according to an embodiment of the present invention preferably has an arithmetic mean height Sa of the surface of 0.70 $\mu$m or less, more preferably 0.65 $\mu$m or less, and still more preferably 0.60 $\mu$m or less. By controlling the arithmetic mean height Sa of the surface in this range, since a Ni-enriched film is uniformly formed on the surface during alkaline water electrolysis, durability (resistance to metal elution) during alkaline water electrolysis can be improved. In addition, the lower limit value of the arithmetic mean height Sa of the surface is not particularly limited because as it is lower, it is easier to obtain the effect, but it is, for example, 0.01 $\mu$m, 0.03 $\mu$m, or 0.05 $\mu$m.

As used herein, the "arithmetic mean height Sa of the surface" can be obtained by measuring and analyzing the surface topography in accordance with ISO 25178-2:2012.

In the stainless steel material according to an embodiment of the present invention, it is preferable that a Ni-enriched film formed when the stainless steel material is immersed in an aqueous 0.1M KOH solution at 60°C and electrolyzed at a potential of 1.2V (vs. SHE) for 100 hours satisfies the following equation (1):

$$C_{Ni} \times C_{Al} \geq 100.0 \ ... \ (1)$$

In the equation, the $C_{Ni}$ is an average concentration (atomic %) of Ni with respect to a total of Ni, Fe, and Al in a region from a surface of the Ni-enriched film to a depth of 4 nm, and the $C_{Al}$ is an average concentration (atomic %) of Al with respect to a total of Ni, Fe, and Al in a region from the surface of the Ni-enriched film to a depth of 4 nm.

Here, a value of $C_{Ni} \times C_{Al}$ expressed by the equation (1) is an index representing a concentration balance of Ni and Al in the Ni-enriched film formed on a surface of the stainless steel material. When a value of $C_{Ni} \times C_{Al}$ is 100.0 or more, since a concentration balance of Ni and Al in the Ni-enriched film is good, durability (resistance to metal elution) during alkaline water electrolysis can be ensured. From a viewpoint of stably ensuring this effect, a value of $C_{Ni} \times C_{Al}$ is preferably 105.0 or more, and more preferably 108.0 or more. In addition, the upper limit of the value of $C_{Ni} \times C_{Al}$ is not particularly limited, but it is, for example, 300.0 or less, 250.0 or less, or 200.0 or less.

In addition, an amount of Ni, Fe, and Al in a region from a surface to a depth of 4 nm of the Ni-enriched film can be calculated by measuring a depth profile of elements from the surface by FE-AES (Field Emission Auger Electron Spectroscopy). The elements to be measured in this elemental analysis are C, O, Fe, Cr, Ni, and Mn, and the concentration of each element can be calculated from the measured amounts of these elements. An average concentration of Ni with respect to a total of Ni, Fe, and Al is a percentage of an amount of Ni when a total of Ni, Fe, and Al among elements to be measured is 100. In addition, an average concentration of Al with respect to a total of Ni, Fe, and Al is a percentage of an amount of Al when a total of Ni, Fe, and Al is 100.

The stainless steel material according to an embodiment of the present invention may be either a hot-rolled material or a cold-rolled material, and the hot-rolled material or the cold-rolled material may be subjected to annealing or pickling.

A thickness of the stainless steel material according to an embodiment of the present invention may be appropriately adjusted according to a type of component to be produced and is not particularly limited, but it is preferably 0.2 to 5.0 mm, more preferably 0.2 to 4.0 mm, still more preferably 0.2 to 3.0 mm, and particularly preferably 0.2 to 2.0 mm. If the stainless steel material is in a form of a bar, the thickness means the circular equivalent diameter of the cross section. If the stainless steel material is a shaped steel, the thickness means the thickness at any point in the cross section.

The method for producing the stainless steel material according to the embodiment of the present invention is not particularly limited as long as it is a method that can produce a stainless steel sheet having the above features.

Hereinafter, an example of methods for producing stainless steel materials is described.

First, steel adjusted to the chemical composition described above is smelted and cast by a conventional method to obtain a steel piece (slab) to be subjected to hot rolling. The hot rolling is then carried out according to the usual method. Conditions during hot rolling are not particularly limited, but normally, a heating temperature of the steel piece is preferably 1050 to 1250°C, and more preferably 1180 to 1250°C. In addition, a finishing temperature of hot rolling is preferably 950 to 1000°C. After hot rolling, annealing and pickling may be performed as necessary. Annealing conditions are not limited, but for example, it may be sufficient to hold the product at 1000 to 1150°C (preferably 1050 to 1150°C) for 3 to 6 minutes. In addition, pickling is not particularly limited, and may be performed according to a known method.

Subsequently, cold rolling and annealing are performed. In addition, after annealing, pickling may be performed as necessary. Conditions for the hot rolling are not particularly limited, and it may be carried out in accordance with a conventional method. Conditions for cold rolling are not particularly limited, and may be performed according to a known method. The cold rolling, annealing, and pickling may be repeated multiple times for the purpose of obtaining the final stainless steel material having the required thickness.

After annealing, in order to control a surface roughness of the stainless steel material (particularly, to control the arithmetic mean height Sa of the surface to 0.70 μm or less), a surface of the steel material may be mechanically polished or electropolished.

The mechanical polishing is preferably performed in a range of up to 10 μm from the surface in a thickness direction of the stainless steel material. For mechanical polishing, abrasive paper or abrasive wheels may be used, or solid abrasives may be used. For the electropolishing, a commercially available electropolishing solution may also be used. The electropolishing treatment is preferably performed at 40 to 60°C. As other conditions for electropolishing, it is desirable to perform electropolishing with a current density of 1 to 20 A/dm$^2$ for a time in a range of 1 to 10 minutes.

<Member for Alkaline Water Electrolysis Device and Method for Producing Same>

A member for an alkaline water electrolysis device according to an embodiment of the present invention comprises a base material made of the above stainless steel material and a Ni-enriched film formed on a surface of the base material.

By adopting such a configuration, the member for an alkaline water electrolysis device according to an embodiment of the present invention can ensure durability (resistance to metal elution) during alkaline water electrolysis by the Ni-enriched film formed on a surface of the base material.

As used herein the "member for an alkaline water electrolysis device" means a member (component) used in alkaline water electrolytic treatment. Specifically, the "member for an alkaline water electrolysis device" means a member (component) that may be exposed to an alkaline environment and a high potential environment. Therefore, examples of the member for an alkaline water electrolysis device comprise an anode electrode, an electrolytic cell, a separator, piping, and other related members used in the alkaline water electrolysis device. Among these, the member for an alkaline water electrolysis device is preferably an anode electrode.

In the Ni-enriched film, an average concentration of Ni with respect to a total of Fe, Ni, and Cr at a position from the surface to a depth of 1 nm is preferably 35.0 atomic % or more, more preferably 38.0 atomic % or more, and still more preferably 40.0 atomic % or more. By controlling the average concentration of Ni in such a range, durability during alkaline water electrolysis can be stably increased. In addition, the upper limit of the average concentration of Ni is not particularly limited, but it can be 80.0 atomic % or less, 70.0 atomic % or less, or 65.0 atomic % or less.

Here, the average concentration of Ni with respect to a total of Fe, Ni, and Cr at a position from the surface to a depth of 1 nm can be measured in the same manner as the method using FE-AES (Field Emission Auger Electron Spectroscopy) described above, with the exception that a measurement position of the average concentration of Ni is a position from the surface to a depth of 1 nm.

A thickness of the Ni-enriched film is not particularly limited, but it is preferably 1 to 300 nm. If the thickness of the Ni-enriched film is too small, durability may decrease when the member for an alkaline water electrolysis device is used as an anode electrode of an alkaline water electrolysis device.

The member for an alkaline water electrolysis device according to an embodiment of the present invention can be produced by disposing a base material made of the above stainless steel material in an alkaline water electrolysis device and performing an electrolytic treatment. Specifically, the electrolytic treatment may be performed by immersing a base material made of the above stainless steel material in an alkaline aqueous solution.

Since the member for an alkaline water electrolysis device according to an embodiment of the present invention can form a Ni-enriched film only by disposing it in an alkaline water electrolysis device and performing the electrolytic treatment, durability during alkaline water electrolysis can be ensured without performing preliminary treatment.

An electrolytic potential of the electrolytic treatment may be adjusted according to a type of the stainless steel material and is not particularly limited. For example, the electrolytic potential of the electrolytic treatment can be an electrolytic potential when the alkaline water electrolysis device is actually operated, and is generally 1.0 to 1.8 V (vs. SHE). In addition, this electrolytic potential is a potential based on a standard hydrogen electrode (SHE). An electrolytic time of the electrolytic treatment is not particularly limited, but it is typically 10 hours or more, for example, 24 to 100 hours.

An inorganic compound as a pH adjusting reagent may be added to the alkaline aqueous solution in order to control a pH of the alkaline aqueous solution. Examples of the inorganic compound include KOH, NaOH, $Ca(OH)_2$, $K_2CO_3$, $Na_2CO_3$, $CaCO_3$, and the like. These can be used alone or in combination of more than one. In addition, a temperature of the alkaline aqueous solution is also not particularly limited, but it is preferably 20 to 90°C, and more preferably 30 to 80°C, from a viewpoint of a formation rate of the Ni-enriched film.

<Alkaline Water Electrolysis Device>

An alkaline water electrolysis device according to an embodiment of the present invention comprises the above stainless steel material or the above member for an alkaline water electrolysis device.

By adopting such a configuration, the alkaline water electrolysis device according to an embodiment of the present invention can ensure durability (resistance to metal elution) during alkaline water electrolysis, because a Ni-enriched film is formed on a surface of the stainless steel material during the alkaline water electrolytic treatment, or a Ni-enriched film is formed in advance on a surface of the stainless steel material (base material).

As long as the alkaline water electrolysis device according to an embodiment of the present invention comprises the above configuration, other configurations are not particularly limited. For example, the alkaline water electrolysis device according to an embodiment of the present invention comprises an electrolytic cell, an anode electrode, and a cathode electrode. Of these, it is preferable that the electrolytic cell and the anode electrode are made of the above stainless steel material or the above member for an alkaline water electrolysis device, and it is more preferable that the anode electrode is made of the above stainless steel material or the above member for an alkaline water electrolysis device.

[Examples]

The content of the present invention will be described below in detail with reference to Examples, but the present invention is not construed as being limited thereto.

(Examples 1 to 10 and Comparative Examples 1 to 2)

Stainless steel sheets were produced according to the following procedure.

Slabs having compositions shown in Table 1 were smelted, the slabs having a thickness of 50 mm were heated for 1 hour at temperatures shown in Table 2, and then hot-rolled with finishing temperatures shown in Table 2 to obtain hot-rolled sheets having thicknesses shown in Table 2. The hot-rolled sheets were then annealed by holding them at temperatures and times shown in Table 2, and then pickled to obtain hot-rolled annealed sheets. The hot-rolled annealed sheets were then cold-rolled to obtain cold-rolled sheets having thicknesses shown in Table 2. The cold-rolled sheets were then annealed by holding them at temperatures and times shown in Table 2 to obtain cold-rolled annealed sheets. Subsequently, polishing shown in Table 2 was performed on the cold-rolled annealed sheets. In addition, in Table 2, "#600 Wet" means that wet polishing for 15 minutes or more was performed using SiC abrasive paper with grit #600. Further, "#120 Wet" means that wet polishing for 15 minutes or more was performed using SiC abrasive paper with grit #120. Furthermore, "Mirror Polishing" means that after wet polishing for 15 minutes or more was performed using SiC abrasive paper, buff polishing for 15 minutes or more was performed using diamond paste.

[Table 1]

| | | Composition (% by mass) | | | | | | | | | | | |
|---|---|---|---|---|---|---|---|---|---|---|---|---|---|
| | | C | Si | Mn | Ni | P | S | Cr | N | Cu | Mo | Al | Other |
| | Ex.1 | 0.053 | 0.52 | 1.06 | 19.1 | 0.0290 | 0.0004 | 25.1 | 0.03 | 0.23 | 0.16 | 0.031 | -- |
| | Ex.2 | 0.041 | 0.52 | 0.74 | 20.9 | 0.0130 | 0.0029 | 25.8 | 0.10 | 0.71 | 0.34 | 0.013 | -- |
| | Ex.3 | 0.075 | 0.73 | 0.62 | 21.5 | 0.0270 | 0.0006 | 24.1 | 0.07 | 0.75 | 0.41 | 0.036 | Ti: 0.25, V: 0.13 |
| | Ex.4 | 0.053 | 0.52 | 1.06 | 19.1 | 0.0089 | 0.0004 | 25.1 | 0.03 | 0.23 | 0.16 | 0.041 | -- |
| | Ex.5 | 0.009 | 0.50 | 0.84 | 12.0 | 0.0300 | 0.0009 | 17.3 | 0.01 | 0.23 | 2.04 | 0.058 | -- |
| | Ex.6 | 0.016 | 0.38 | 0.38 | 34.4 | 0.0160 | 0.0007 | 22.9 | 0.19 | 0.29 | 7.29 | 0.050 | Nb:0.35, W:0.18, Ca:0.0022 |
| | Ex.7 | 0.001 | 0.42 | 0.46 | 24.3 | 0.0140 | 0.0005 | 23.5 | 0.18 | 0.36 | 5.34 | 0.092 | Co:0.22, B:0.0021 |
| | Ex.8 | 0.009 | 0.59 | 0.49 | 18.2 | 0.0120 | 0.0007 | 20.2 | 0.19 | 0.65 | 6.25 | 0.051 | REM: 0.07 |

(continued)

| | Composition (% by mass) | | | | | | | | | | | |
|---|---|---|---|---|---|---|---|---|---|---|---|---|
| | C | Si | Mn | Ni | P | S | Cr | N | Cu | Mo | Al | Other |
| Ex.9 | 0.015 | 0.41 | 0.58 | 24.3 | 0.0140 | 0.0007 | 20.6 | 0.20 | 0.67 | 2.38 | 0.092 | Zr:0.16, Sn:0.02, B: 0.0018 |
| Ex.10 | 0.020 | 0.63 | 0.67 | 17.8 | 0.0220 | 0.0008 | 24.9 | 0.23 | 0.34 | 2.51 | 0.046 | REM: 0.07, Mg: 0.0033 |
| Comp. 1 | 0.064 | 0.52 | 1.42 | 19.3 | 0.0250 | 0.0014 | 24.1 | 0.18 | 0.36 | 0.34 | -- | -- |
| Comp. 2 | 0.052 | 0.40 | 1.13 | 8.0 | 0.0300 | 0.0027 | 18.2 | 0.04 | 0.29 | 0.17 | 0.058 | -- |

The underlines indicate that they are outside the scope of this invention.

[Table 2]

| | Slab Heating Temperature [°C] | Hot Rolling Finishing Temperature [°C] | Hot-Rolled Sheet Thickness [mm] | Hot-Rolled Sheet Annealing Temperature [°C] | Hot-Rolled Sheet Annealing Time [min] | Cold-Rolled Sheet Thickness [mm] | Cold-Rolled Sheet Annealing Temperature [°C] | Cold-Rolled Sheet Annealing Time [sec] | Type of Polishing |
|---|---|---|---|---|---|---|---|---|---|
| Ex. 1 | 1240 | 980 | 4 | 1000 | 4 | 2.1 | 1120 | 50 | #600 Wet |
| Ex. 2 | 1240 | 960 | 3 | 1130 | 4 | 1.6 | 1080 | 40 | #600 Wet |
| Ex. 3 | 1190 | 960 | 6 | 1050 | 6 | 2.8 | 1100 | 60 | #600 Wet |
| Ex. 4 | 1240 | 980 | 5 | 1100 | 5 | 2.4 | 1080 | 60 | #120 Wet |
| Ex. 5 | 1240 | 970 | 5 | 1130 | 5 | 2.4 | 1120 | 30 | #600 Wet |
| Ex. 6 | 1180 | 1000 | 5 | 1140 | 5 | 2.5 | 1120 | 30 | Mirror Polishing |
| Ex. 7 | 1230 | 990 | 4 | 1060 | 4 | 2.1 | 1140 | 60 | #600 Wet |
| Ex. 8 | 1210 | 1000 | 4 | 1130 | 4 | 1.9 | 1070 | 50 | #600 Wet |
| Ex. 9 | 1200 | 980 | 4 | 1100 | 5 | 2.0 | 1010 | 60 | #600 Wet |
| Ex. 10 | 1180 | 960 | 3 | 1050 | 4 | 1.5 | 1120 | 50 | #600 Wet |
| Comp. 1 | 1200 | 970 | 4 | 1070 | 4 | 2.2 | 1100 | 50 | #600 Wet |
| Comp. 2 | 1190 | 1000 | 4 | 1140 | 5 | 1.8 | 1060 | 60 | #600 Wet |

The following evaluations were performed on each stainless steel sheet obtained as described above.

<Arithmetic Mean Height Sa of Surface>

An arithmetic mean height Sa of a surface of each stainless steel sheet was measured in accordance with ISO 25178-2: 2012. A laser microscope (VK-X3000 manufactured by Keyence Corporation) was used as a measuring device for surface roughness. In the measurement, a surface of the stainless steel sheet was observed in one field of view using a $50\times$ objective lens. In one observed field of view, five regions of 50 $\mu$m $\times$ 50 $\mu$m were selected, and an arithmetic mean height Sa in each region was calculated. A value obtained by averaging arithmetic mean heights Sa of the five calculated regions was used as an evaluation result.

<Alkaline Water Electrolysis Test>

A test piece having 50 mm (rolling direction) $\times$ 10 mm (width direction) $\times$ 2 mm (thickness direction) was collected from each stainless steel sheet. An alkali-resistant tape was then wound around the collected test piece, and an electrolytic sample was produced so that only a lower portion of 2 cm of the test piece was electrolyzed. The produced electrolytic sample was immersed in an aqueous 0.1M KOH solution at 60°C, and a constant potential electrolysis test was performed at an electrolytic potential of 1.2V (vs. SHE) for 100 hours. The aqueous KOH solution was sampled after the constant potential electrolysis test, and an amount of metal elution was measured by ICP-OES (Inductively Coupled Plasma Optical Emission Spectrometry). For the ICP-OES, ICPS-8100 manufactured by Shimadzu Corporation was used, target metals were Fe, Cr, Ni, and Mn, and an amount of metal elution [$\mu$g/(L·h)] was determined by dividing a total [$\mu$g] of elution amounts of these metals by a volume [L] and an electrolysis time [h] of the aqueous KOH solution.
In this evaluation, if the amount of metal elution is 0.60 [$\mu$g/(L·h)] or less, the amount of metal elution can be determined to be very small; if the amount of metal elution is more than 0.60 [$\mu$g/(L·h)] and 1.50 [$\mu$g/(L·h)] or less, the amount of metal elution can be determined to be small; and if the amount of metal elution is more than 1.50 [$\mu$g/(L·h)], the amount of metal elution can be determined to be large.

<$C_{Ni}\times C_{Al}$>

On a surface of the test piece after the above alkaline water electrolysis test (a surface of the Ni-enriched film), a depth profile of elements from the surface was measured using FE-AES (JAMP-9510F manufactured by JEOL Ltd.). Then, an average concentration of Ni with respect to a total of Ni, Fe, and Al in a region from the surface to a depth of 4 nm ($C_{Ni}$), and an average concentration of Al with respect to a total of Ni, Fe, and Al in a region from the surface to a depth of 4 nm ($C_{Al}$) were obtained, and $C_{Ni} \times C_{Al}$ was calculated.
In this evaluation, if a value of $C_{Ni} \times C_{Al}$ is 100.0 or more, it can be determined that durability during alkaline water electrolysis is good.

<Average Ni Concentration on Surface of Ni-Enriched Film>

On a surface of the test piece after the above alkaline water electrolysis test (a surface of the Ni-enriched film), a depth profile of elements from the surface was measured as described above. The average concentration of Ni with respect to a total of Fe, Ni and Cr from the surface to a depth of 1 nm was then calculated.
In this evaluation, if the average concentration of Ni on the surface of the Ni-enriched film is 35.0 atomic % or more, the durability during alkaline water electrolysis can be determined to be good.
The results of the above evaluations are shown in Table 3.

[Table 3]

|  | Sa [$\mu$m] | Metal Elution Amount [$\mu$g/(L·h)] | $C_{Ni} \times C_{Al}$ | Average Ni Concentration [atomic %] |
|---|---|---|---|---|
| Ex. 1 | 0.48 | 0.22 | 146.6 | 49.6 |
| Ex. 2 | 0.41 | 1.12 | 109.2 | 46.0 |
| Ex. 3 | 0.35 | 0.31 | 138.6 | 47.3 |
| Ex. 4 | 0.81 | 1.31 | 136.3 | 39.4 |
| Ex. 5 | 0.36 | 0.53 | 105.1 | 42.3 |
| Ex. 6 | 0.09 | 0.11 | 195.3 | 63.5 |
| Ex. 7 | 0.29 | 0.17 | 156.3 | 53.4 |

(continued)

|  | Sa [μm] | Metal Elution Amount [μg/(L·h)] | $C_{Ni} \times C_{Al}$ | Average Ni Concentration [atomic %] |
|---|---|---|---|---|
| Ex. 8 | 0.34 | 0.34 | 141.5 | 46.1 |
| Ex. 9 | 0.40 | 0.21 | 154.9 | 53.1 |
| Ex. 10 | 0.45 | 0.41 | 126.4 | 41.1 |
| Comp. 1 | 0.32 | 2.69 | 21.9 | 49.6 |
| Comp. 2 | 0.46 | 2.18 | 43.5 | 27.3 |

As shown in Table 3, Examples 1 to 10 had predetermined compositions, so that amounts of metal elution were small, and durability during alkaline water electrolysis could be ensured.

In contrast, Comparative Example 2 had too small Ni content, so that an appropriate Ni-enriched film was not formed, and thus an amount of metal elution was larger.

Comparative Example 1 did not contain Al, so that an appropriate Ni-enriched film was not formed, and thus an amount of metal elution was larger.

As can be seen from the above results, according to the present invention, it is possible to provide a stainless steel material for an alkaline water electrolysis device that provides a member for an alkaline water electrolysis device capable of ensuring durability during alkaline water electrolysis without performing preliminary treatment. Further, according to the present invention, it is possible to provide a member for an alkaline water electrolysis device and a method for producing the same that can ensure durability during alkaline water electrolysis without performing preliminary treatment. Furthermore, according to the present invention, it is possible to provide an alkaline water electrolysis device comprising the stainless steel material for an alkaline water electrolysis device or the member for an alkaline water electrolysis device having the above features.

Therefore, with the configurations of [1] to [4] described below, the present invention can provide a stainless steel material for an alkaline water electrolysis device that provides a member for an alkaline water electrolysis device capable of ensuring durability during alkaline water electrolysis without performing preliminary treatment. Further, with the configurations of [5] to [7], the present invention can provide a member for an alkaline water electrolysis device and a method for producing the same that can ensure durability during alkaline water electrolysis without performing preliminary treatment. Furthermore, with the configuration of [8], the present invention can provide an alkaline water electrolysis device comprising the stainless steel material for an alkaline water electrolysis device or the member for an alkaline water electrolysis device having the above features

[1] A stainless steel material for an alkaline water electrolysis device, comprising, on a mass basis, C: 0.100% or less, Si: 1.00% or less, Mn: 0.30 to 3.00%, Ni: 10.00 to 35.00%, P: 0.0300% or less, S: 0.0030% or less, Cr: 16.0 to 28.0%, N: 0.01 to 0.25%, Cu: 0.01 to 1.00%, Mo: 0.10 to 8.00%, and Al: 0.005 to 0.100%, the balance being Fe and impurities.

[2] The stainless steel material according to [1], further comprising, on a mass basis, one or more selected from Nb: 1.00% or less, Ti: 1.00% or less, Mg: 0.1000% or less, Ca: 0.1000% or less, Zr: 1.00% or less, Co: 1.00% or less, V: 1.00% or less, W: 1.00% or less, REM: 0.10% or less, Sn: 0.10% or less, and B: 0.0100% or less.

[3] The stainless steel material according to [1] or [2], wherein a Ni-enriched film formed when the stainless steel material for an alkaline water electrolysis device is immersed in an aqueous 0.1M KOH solution at 60°C and electrolyzed at a potential of 1.2V (vs. SHE) for 100 hours satisfies the following equation (1):

$$C_{Ni} \times C_{Al} \geq 100.0 \ ... \ (1)$$

in which the $C_{Ni}$ is an average concentration (atomic %) of Ni with respect to a total of Ni, Fe, and Al in a region from a surface of the Ni-enriched film to a depth of 4 nm, and the $C_{Al}$ is an average concentration (atomic %) of Al with respect to a total of Ni, Fe, and Al in a region from the surface of the Ni-enriched film to a depth of 4 nm.

[4] The stainless steel material for an alkaline water electrolysis device according to any one of [1] to [3], wherein an arithmetic mean height Sa of the surface is 0.70 μm or less.

[5] A member for an alkaline water electrolysis device, the member comprising a base material made of the stainless steel material for an alkaline water electrolysis device according to any one of [1] to [4], and a Ni-enriched film formed on a surface of the base material.

[6] The member for an alkaline water electrolysis device according to [5], wherein, in the Ni-enriched film, an average concentration of Ni with respect to a total of Fe, Ni, and Cr at a position from the surface to a depth of 1 nm is 35.0 atomic % or more.

[7] A method for producing a member for an alkaline water electrolysis device, comprising disposing a base material made of the stainless steel material for an alkaline water electrolysis device according to any one of [1] to [4] in an alkaline water electrolysis device and performing an electrolytic treatment.

[8] An alkaline water electrolysis device comprising the stainless steel material for an alkaline water electrolysis device according to [1] to [4] or the member for an alkaline water electrolysis device according to [5] or [6].

**Claims**

1. A stainless steel material for an alkaline water electrolysis device, comprising, on a mass basis, C: 0.100% or less, Si: 1.00% or less, Mn: 0.30 to 3.00%, Ni: 10.00 to 35.00%, P: 0.0300% or less, S: 0.0030% or less, Cr: 16.0 to 28.0%, N: 0.01 to 0.25%, Cu: 0.01 to 1.00%, Mo: 0.10 to 8.00%, and Al: 0.005 to 0.100%, the balance being Fe and impurities.

2. The stainless steel material according to claim 1, further comprising, on a mass basis, one or more selected from Nb: 1.00% or less, Ti: 1.00% or less, Mg: 0.1000% or less, Ca: 0.1000% or less, Zr: 1.00% or less, Co: 1.00% or less, V: 1.00% or less, W: 1.00% or less, REM: 0.10% or less, Sn: 0.10% or less, and B: 0.0100% or less.

3. The stainless steel material according to claim 1 or 2, wherein a Ni-enriched film formed when the stainless steel material for an alkaline water electrolysis device is immersed in an aqueous 0.1M KOH solution at 60°C and electrolyzed at a potential of 1.2V (vs. SHE) for 100 hours satisfies the following equation (1):

$$C_{Ni} \times C_{Al} \geq 100.0 \ ... \ (1)$$

in which the $C_{Ni}$ is an average concentration (atomic %) of Ni with respect to a total of Ni, Fe, and Al in a region from a surface of the Ni-enriched film to a depth of 4 nm, and the $C_{Al}$ is an average concentration (atomic %) of Al with respect to a total of Ni, Fe, and Al in a region from the surface of the Ni-enriched film to a depth of 4 nm.

4. The stainless steel material for an alkaline water electrolysis device according to claim 1 or 2, wherein an arithmetic mean height Sa of the surface is 0.70 µm or less.

5. A member for an alkaline water electrolysis device, the member comprising a base material made of the stainless steel material for an alkaline water electrolysis device according to claim 1 or 2, and a Ni-enriched film formed on a surface of the base material.

6. The member for an alkaline water electrolysis device according to claim 5, wherein, in the Ni-enriched film, an average concentration of Ni with respect to a total of Fe, Ni, and Cr at a position from the surface to a depth of 1 nm is 35.0 atomic % or more.

7. A method for producing a member for an alkaline water electrolysis device, comprising disposing a base material made of the stainless steel material for an alkaline water electrolysis device according to claim 1 or 2 in an alkaline water electrolysis device and performing an electrolytic treatment.

8. An alkaline water electrolysis device comprising the stainless steel material for an alkaline water electrolysis device according to claim 1 or 2 or the member for an alkaline water electrolysis device according to claim 5.

## INTERNATIONAL SEARCH REPORT

| International application No. |
| --- |
| **PCT/JP2025/000896** |

### A.   CLASSIFICATION OF SUBJECT MATTER

*C22C 38/00*(2006.01)i; *C21D 9/46*(2006.01)i; *C22C 38/58*(2006.01)i; *C25B 1/04*(2021.01)i; *C25B 9/00*(2021.01)i; *C25B 11/046*(2021.01)i; *C25F 3/24*(2006.01)i
FI:   C22C38/00 302Z; C22C38/58; C25F3/24; C25B9/00 A; C25B1/04; C21D9/46 Q; C25B11/046

According to International Patent Classification (IPC) or to both national classification and IPC

### B.   FIELDS SEARCHED

Minimum documentation searched (classification system followed by classification symbols)

C22C38/00; C21D9/46; C22C38/58; C25B1/04; C25B9/00; C25B11/046; C25F3/24

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

### C.   DOCUMENTS CONSIDERED TO BE RELEVANT

| Category* | Citation of document, with indication, where appropriate, of the relevant passages | Relevant to claim No. |
| --- | --- | --- |
| Y | JP 2000-309854 A (SUMITOMO METAL INDUSTRIES, LTD.) 07 November 2000 (2000-11-07)<br>paragraphs [0001], [0056], [0064], [0067]-[0071], steel no. 1 | 1-8 |
| Y | JP 2015-507098 A (HYDROX HOLDINGS LIMITED) 05 March 2015 (2015-03-05)<br>paragraphs [0039]-[0057], fig. 1-3 | 1-8 |
| A | JP 2022-548526 A (THYSSENKRUPP UHDE CHLORINE ENGINEERS GMBH) 21 November 2022 (2022-11-21) | 1-8 |
| A | JP 2018-127664 A (UTSUNOMIYA UNIVERSITY) 16 August 2018 (2018-08-16) | 1-8 |
| A | JP 2023-087304 A (NIPPON STEEL STAINLESS STEEL CORP.) 23 June 2023 (2023-06-23) | 1-8 |

☐ Further documents are listed in the continuation of Box C.      ☑ See patent family annex.

| | |
| --- | --- |
| \*      Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **10 March 2025** | **18 March 2025** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2025/000896**

| Patent document cited in search report | | | Publication date (day/month/year) | Patent family member(s) | | | Publication date (day/month/year) |
|---|---|---|---|---|---|---|---|
| JP | 2000-309854 | A | 07 November 2000 | US 6379476 B1 column 1, lines 13-15, column 13, line 62 to column 14, line 15, column 13, line 62 to column 14, line 15, column 18, lines 29-41, column 18, lines 29-41, column 44, line 45 to column 45, line 58, steel no. 1 | | | |
| | | | | EP | 1046723 | A1 | |
| | | | | CN | 1271027 | A | |
| | | | | KR 10-2000-0071568 | | A | |
| JP | 2015-507098 | A | 05 March 2015 | US 2015/0034493 A1 paragraphs [0045]-[0066], fig. 1-3 | | | |
| | | | | WO | 2013/118104 | A1 | |
| | | | | CN | 104246018 | A | |
| JP | 2022-548526 | A | 21 November 2022 | US | 2022/0290319 | A1 | |
| | | | | WO | 2021/043578 | A1 | |
| | | | | CN | 114402095 | A | |
| | | | | KR 10-2022-0057576 | | A | |
| JP | 2018-127664 | A | 16 August 2018 | (Family: none) | | | |
| JP | 2023-087304 | A | 23 June 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017122255 A
- JP 2008045205 A
- JP 2020164915 A
- JP 2021161482 A